# EUROPEAN PATENT SPECIFICATION

(11) **EP 4 321 357 B1**
(45) Date of publication and mention of the grant of the patent: **03.12.2025**
(21) Application number: 23178522.1
(22) Date of filing: 09.06.2023
(51) Int. Cl.: F04B 35/04, F04B 39/00, F04B 39/12, B60H 1/32

(54) **ELECTRIC COMPRESSOR STRUCTURE AND PROTECTOR FOR ELECTRIC COMPRESSOR**
ELEKTRISCHE VERDICHTERSTRUKTUR UND SCHUTZ FÜR ELEKTRISCHEN VERDICHTER
STRUCTURE DE COMPRESSEUR ÉLECTRIQUE ET PROTECTEUR POUR COMPRESSEUR ÉLECTRIQUE

(30) Priority: 09.08.2022 JP 2022127069
(43) Date of publication of application: 14.02.2024
(73) Proprietor: Suzuki Motor Corporation, Hamamatsu-shi, Shizuoka 432-8611 (JP)
(72) Inventor: AOKI, Yoshihiro, HAMAMATSU-SHI, 432-8611 (JP)
(74) Representative: Plasseraud IP

(56) References cited:
- EP-A1- 2 679 420
- EP-A1- 3 875 761
- JP-A- 2016 160 824
- US-A1- 2011 243 771

## Description

### [Technical Field]

The present invention relates to an electric compressor structure and to a protector for an electric compressor.

### [Background Art]

For example, a compressor installed in a vehicle may be used for an air-conditioning system of the vehicle, and is usually disposed inside a motive power compartment (an engine compartment or a motor compartment) that is provided in a front part of the vehicle. Here, for example, compressors for vehicles having an engine include those that are driven using the motive power of the engine and those that are driven without using the motive power of the engine. As compressors that do not use the motive power of engines, electric compressors that are driven by electricity are known.

Generally, an electric compressor has a compression mechanism, a motor, a housing that houses them, and an inverter that controls driving of the motor, and is configured to rotate the motor by electricity to compress gas, etc. There is a known electric compressor in which, as disclosed in Patent Literature 1, for example, an inverter for driving a motor is disposed inside a casing of a compressor to achieve higher efficiency through reduction in size and weight of an air-conditioning system as well as shortening of wire lengths, etc.

Depending on the place (facility) where an electric compressor is installed, the electric compressor may be subjected to an impact load. For example, in the case in which an electric compressor is provided in a front part of a vehicle, when the vehicle experiences a frontal collision or a side collision, an impact load may be transmitted also to the electric compressor. As a countermeasure, for example, it is possible to adopt a structure in which the electric compressor is disposed so as to be surrounded by highly rigid constituent members of the vehicle body such that an impact load is less likely to be transmitted to the electric compressor. It is also possible to make the vehicle body structure a more robust structure and thereby protect the electric compressor from an impact load. However, these cases may involve restrictions on the layout, an increase in weight due to the enhanced rigidity of the vehicle body, etc.

In addition, there are known electric compressors in which a cover member is provided on an outer side of a housing of the electric compressor, for example, like the electric compressor disclosed in Patent Literature 1. When the electric compressor is subjected to an external force, this cover member reduces the load acting on parts at which the cover member is fixed to the housing by using the so-called principle of leverage. It is intended that the electric compressor be thereby protected from the external force. An example of electric compressor reinforcement structure is described in Patent Literature 2. An example of motor-driven compressor with a cover is described in Patent Literature 3. An example of electric compressor with outer guide surfaces is described in Patent Literature 4.

### [Citation List]

### [Patent Literature]

[Patent Literature 1] JP 2016-160824 A
[Patent Literature 2] EP 3875761 A1
[Patent Literature 3] EP 2679420 A1
[Patent Literature 4] US 2011/243771 A1

### [Summary of Invention]

### [Problems to be Solved by the Invention]

In the electric compressor like the above-described example, however, when an impact load acting on the cover member is high in the event of an offset collision of the vehicle, etc., the load transmitted to the parts at which the cover member is fixed to the housing and a support boss that supports the electric compressor increases. In such a case, the housing may deform around the fixing parts or the support boss. When the amount of deformation becomes large, the housing may be damaged. Thus, the protection structure in which the cover member is mounted as in the above-described example has room for improvement in terms of protecting the electric compressor from an impact load.

Having been made to solve this challenge, the present invention aims to make it possible to reduce, by means of a protector of an electric compressor, damage and deformation of a housing of the electric compressor due to an external force transmitted to the housing.

### [Means for Solving the Problems]

An electric compressor structure according to the present invention to achieve the above object is defined in claim 1. The electric compressor structure includes: a compression mechanism that compresses refrigerant; an electrically operated unit that drives the compression mechanism by electricity; a housing that houses the compression mechanism and the electrically operated unit; and a protector that has a fixing surface to be fixed to the housing and is disposed on the outer side of the housing, at a position facing the electrically operated unit. In this electric compressor, a deformation inducing part that induces deformation when a load acts on the protector from the outside is provided in the protector, at a position facing the electrically operated unit.

### [Advantageous Effect of Invention]

The present invention makes it possible to reduce, by means of the protector of the electric compressor, damage and deformation of the housing of the electric compressor due to an external force transmitted to the housing.

### [Brief Description of Drawings]

[Figure 1] Figure 1 is a perspective view showing an external appearance of an electric compressor according to the present invention.
[Figure 2] Figure 2 is an exploded perspective view of the electric compressor of Figure 1.
[Figure 3] Figure 3 is a front view of the electric compressor of Figure 1.
[Figure 4] Figure 4 is a front view showing a state in which a protector has been removed from the electric compressor of Figure 3.
[Figure 5] Figure 5 is a schematic plan view schematically showing a state in which the electric compressor of Figure 1 is installed in a front part of a vehicle.
[Figure 6] Figure 6 is a schematic side view of the vehicle and the electric compressor of Figure 5 as seen from the direction of arrows A.
[Figure 7] Figure 7 is a schematic front view schematically showing the electric compressor of Figure 3.
[Figure 8] Figure 8 is a schematic side view of the electric compressor of Figure 3 as seen from a left side.
[Figure 9] Figure 9 is a front view showing the protector of Figure 2 alone.
[Figure 10] Figure 10 is a view of section X-X in Figure 9 as seen from the arrow direction.
[Figure 11] Figure 11 is a view of section Y-Y in Figure 9 as seen from the arrow direction.
[Figure 12] Figure 12 shows side views of Figure 9, with (a) being a left-side part and (b) being a right-side part.
[Figure 13] Figure 13 is a schematic front view showing a modified example of Figure 7.

### [Mode for Carrying Out the Invention]

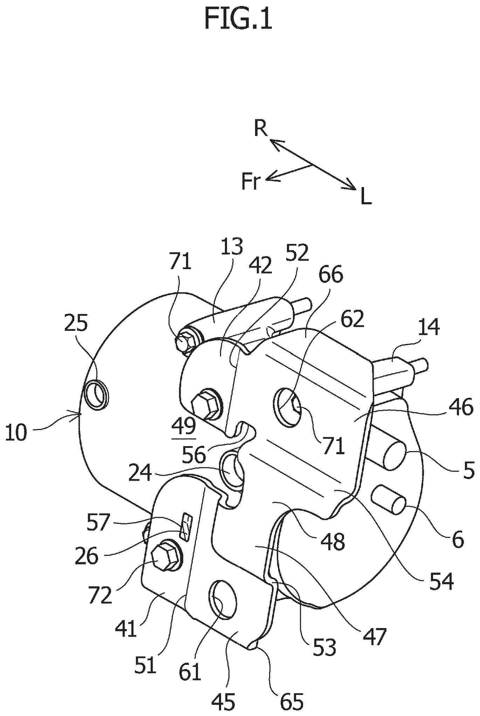

One embodiment of an electric compressor according to the present invention will be described below with reference to the drawings (Figure 1 to Figure 13). In the drawings, the direction of the arrow Fr indicates the front side in a front-rear direction of a vehicle in which an electric compressor 1 is installed. A "front part (front end) and a rear part (rear end)" in the description of the embodiment correspond to a front part and a rear part in the vehicle front-rear direction. The arrow R and the arrow L indicate the right side and the left side when an occupant of the vehicle equipped with the electric compressor 1 looks at the vehicle front side. In the description of the embodiment, a housing outer side indicates a direction oriented from the inside toward the outside of a housing 10.

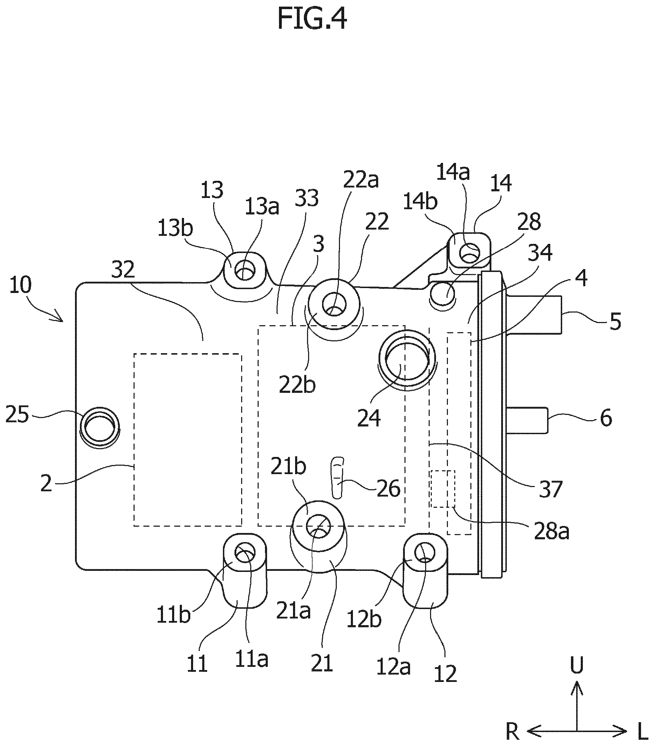

The electric compressor 1 of this embodiment has, as shown in Figure 4, a compression mechanism 2 that compresses refrigerant, such as air, electrically operated units 3, 4 that drive the compression mechanism 2 by electricity, and the housing 10 that houses the compression mechanism 2 and the electrically operated units, and further has, as shown in Figure 1 to Figure 4, a protector 40 that is detachably mounted on an outer side of the housing 10. Here, the electrically operated units 3, 4 include a motor 3 that has a cylindrical or columnar elongated rotating shaft (not shown) and an inverter 4 that controls driving of the motor 3. The electric compressor 1 of this embodiment is disposed inside a motive power compartment 80 that is provided in a front part of the vehicle.

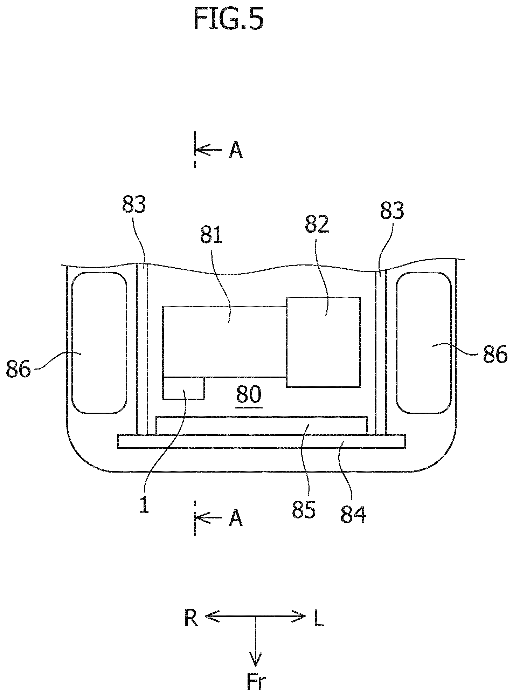

First, a vehicle front structure in which the motive power compartment 80, where the electric compressor 1 of this embodiment is disposed, is provided will be described. The motive power compartment 80 is disposed between front wheels 86 that are provided on both sides in a vehicle width direction. As shown in Figure 5, the vehicle front structure has side members 83, a radiator 85, a bumper member 84, and two motive power sources (a first motive power source 81 and a second motive power source 82).

As shown in Figure 5, the side members 83 are members extending in the vehicle front-rear direction, and are disposed on both outer sides of the motive power compartment 80 in the vehicle width direction. The side members 83 are disposed on an inner side of the front wheels 86 in the vehicle width direction, and are high-rigidity members constituting parts of the framework of the vehicle body. The bumper member 84 is disposed at front ends of the side members 83 and extends in the vehicle width direction. The radiator 85 is disposed behind the bumper member 84 and has a substantially rectangular shape when seen from the vehicle front side.

In this embodiment, as shown in Figure 5, the first motive power source 81 and the second motive power source 82 are disposed next to each other in the vehicle width direction, and are disposed on the vehicle rear side of and spaced apart from the radiator 85. In this embodiment, the first motive power source 81 is an engine or an electric motor 3, and the second motive power source 82 is an electric motor 3.

In the electric compressor 1 of this embodiment, the compression mechanism 2, the motor 3, and the inverter 4 are disposed inside the housing 10, next to one another in a longitudinal direction of the rotating shaft. The housing 10 is a substantially cylindrical member extending in the longitudinal direction of the rotating shaft. The protector 40 is a plate-shaped member mounted to the housing 10 and has fixing surface parts 41, 42 to be fixed to the housing 10. The protector 40 is disposed on the outer side of the housing 10, at a position facing the electrically operated units 3, 4. Deformation inducing parts that induce deformation when a load acts on the protector 40 from the outside are provided in the protector 40, at positions facing the electrically operated units 3, 4. The deformation inducing parts of the protector 40 are parts at which the strength and the rigidity are set to be lower than at other parts of the protector 40, and include, for example, step parts 51 to 54, a cutout (e.g., a clearance 49), an opening (e.g., insertion parts 61, 62), and a thin part that make the structure fragile. Details of the deformation inducing parts will be described later.

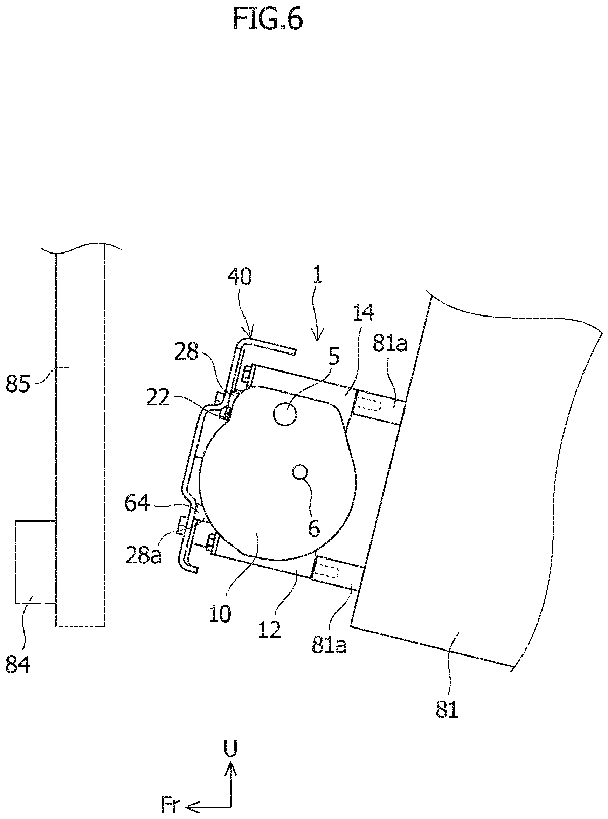

In this embodiment, as shown in Figure 5 and Figure 6, the electric compressor 1 is detachably mounted on the first motive power source 81. Connection between the electric compressor 1 and the first motive power source 81 will be described later. The electric compressor 1 is disposed on the vehicle rear side of and spaced apart from the radiator 85. Here, the protector 40 is mounted on a front part of the housing 10 in the vehicle front-rear direction. The protector 40 is disposed so as to overlap parts of the inverter 4 and the motor 3 inside the housing 10 when the electric compressor 1 is seen from the vehicle front side.

Thus, providing the protector 40 of the electric compressor 1 with the deformation inducing parts makes it possible to induce deformation of the protector 40 when an external force acts on the protector 40, and thereby absorb the external force as deformation energy of the protector 40. As a result, impact energy transmitted from the protector 40 to the housing 10 can be reduced.

That is, this configuration makes it possible to reduce, by means of the protector 40 of the electric compressor 1, damage and deformation of the housing 10 of the electric compressor 1 due to an external force transmitted to the housing 10.

In the following, the constituent members of the electric compressor 1 will be described. First, the motor 3 and the inverter 4 constituting the electrically operated units will be described. The motor 3 has the rotating shaft, a rotor (not shown), and a stator (not shown). The rotating shaft is rotatably supported by at least two bearings (not shown) provided in the housing 10, and in this example, extends horizontally along the vehicle width direction. The rotor is disposed so as to surround the rotating shaft from a radially outer side, and is configured to rotate along with the rotating shaft. The stator is disposed so as to surround the rotor from the radially outer side and be mounted on an inner wall of the housing 10.

The inverter 4 passes a current through a coil of the rotor and a coil of the stator by electricity supplied from an external power source, and it controls driving of the motor 3. As shown in Figure 4, the inverter 4 is disposed on the left side of the motor 3 in the vehicle width direction. The inverter 4 is provided with two connectors (e.g., a high-voltage wire connector 5 and a low-voltage wire connector 6). For example, a high-voltage wire is connected to the high-voltage wire connector 5 to supply electricity for driving the motor 3. A low-voltage wire is connected, and it is configured to be able to transmit and receive electrical signals (control signals) for controlling driving of the motor 3. The connectors 5, 6 protrude from an end of the housing 10 along the longitudinal direction of the rotating shaft. In this example, the high-voltage wire connector 5 and the low-voltage wire connector 6 protrude leftward from a left end of the housing 10.

Next, the housing 10 will be described. As shown in Figure 4, the housing 10 has a substantially cylindrical shape extending in the longitudinal direction of the rotating shaft of the motor 3, and parts to which the protector 40 is mounted and parts that are mounted to the vehicle body are provided in an outer-side part of the housing 10. In this example, the housing 10 is mounted on the first motive power source 81 and extends in the vehicle width direction.

The inside of the housing 10 of this embodiment is divided into at least three regions. In this example, as shown in Figure 4, the housing 10 has a compression mechanism housing area 32 that houses the compression mechanism 2, a motor housing area 33 that houses the motor 3, and an inverter housing area 34 that houses the inverter 4, and these areas are indicated by dashed lines in Figure 4. The three housing areas are disposed next to one another in the longitudinal direction of the rotating shaft of the motor 3 (vehicle width direction). A partition 37 that divides the inverter housing area 34 and the motor housing area 33 is provided between these regions, and the partition 37 is sealed such that the refrigerant does not flow into the inverter housing area 34.

Next, the external shape of the housing 10 will be described. The housing 10 has a cylindrical shape extending in the vehicle width direction in a state of being mounted on the first motive power source 81. The housing 10 has coupling parts 11 to 14 for coupling the housing 10 to a member constituting a part of the vehicle through coupling members, such as housing fixing bolts 71. A plurality of coupling parts 11 to 14 may be provided. In this case, the plurality of coupling parts 11 to 14 should be disposed spaced apart from each other along a first direction (in this example, the vehicle width direction) in which the compression mechanism 2 and the electrically operated units 3, 4 are located next to one another. The coupling parts 11 to 14 may be provided on both sides of the housing 10 in a second direction (in this example, the vehicle up-down direction) that intersects the first direction in which the compression mechanism 2 and the electrically operated units 3, 4 are located next to each other.

In this embodiment, as shown in Figure 6, the coupling parts 11 to 14 in this example are fastened to the first motive power source 81 with the housing fixing bolts (coupling members) 71. In this embodiment, the first coupling part 11, the second coupling part 12, the third coupling part 13, and the fourth coupling part 14 are provided in a cylindrical main body of the housing 10.

As shown in Figure 1 to Figure 4, the first coupling part 11 and the second coupling part 12 have a tubular shape into which the housing fixing bolt 71 is insertable. The first coupling part 11 and the second coupling part 12 in this example have a tubular shape that extends toward the vehicle rear side while inclining toward the vehicle lower side, and are provided at a lower part of the main body of the cylindrical housing 10. The first coupling part 11 and the second coupling part 12 are disposed spaced apart from each other in the vehicle width direction (first direction), with the first coupling part 11 disposed on the right side of and spaced apart from the second coupling part 12, while their positions in the vehicle up-down direction are set to be almost the same.

As shown in Figure 4, the third coupling part 13 and the fourth coupling part 14 have, as seen in a vehicle front view, a tubular shape into which the housing fixing bolt 71 is insertable. In this example, as shown in Figure 6, the third coupling part 13 and the fourth coupling part 14 have a tubular shape that extends toward the vehicle rear side while inclining toward the vehicle lower side, and are provided at an upper part of the main body of the cylindrical housing 10 that extends in the vehicle width direction. The third coupling part 13 and the fourth coupling part 14 are disposed spaced apart from each other in the vehicle width direction (first direction), with the fourth coupling part 14 disposed on the left side of, and spaced apart from, the third coupling part 13, and disposed slightly above the third coupling part 13.

The first coupling part 11 is provided with a first hole 11a into which the housing fixing bolt 71 is inserted, and a bearing surface 11b is formed at a circumferential edge of the first hole 11a at a front end of the first coupling part 11. The first coupling part 11 and a receiving part 81a of the first motive power source 81 are fastened together as the housing fixing bolt 71 is tightened in a state in which the housing fixing bolt 71 is passed through the first hole 11a, a bearing surface at the head of the housing fixing bolt 71 is in contact with the bearing surface 11b of the first coupling part 11, and a rear end of the first coupling part 11 is in contact with the receiving part 81a (see Figure 6). Like the first coupling part 11, the second coupling part 12 is provided with a second hole 12a and a bearing surface 12b, and a rear end of the second coupling part 12 and a receiving part 81a of the first motive power source 81 are fastened together with the housing fixing bolt 71. The third coupling part 13 is provided with a third hole 13a and a bearing surface 13b, and the fourth coupling part 14 is provided with a fourth hole 14a and a bearing surface 14b, and rear ends of the third coupling part 13 and the fourth coupling part 14 are fastened to receiving parts 81a of the first motive power source 81 with the housing fixing bolts 71.

When the electric compressor 1 is seen from the vehicle front side, the first coupling part 11 and the third coupling part 13 are disposed next to, and spaced apart from, each other in the vehicle up-down direction. In this example, the third coupling part 13 is disposed above the first coupling part 11. The fourth coupling part 14 is disposed on the upper side of, and spaced apart, from the second coupling part 12 in the vehicle up-down direction, and is disposed so as to be somewhat offset toward the left side in the vehicle width direction. The inclination directions of the first coupling part 11, the second coupling part 12, the third coupling part 13, and the fourth coupling part 14 are parallel to one another. In the state in which the electric compressor 1 is mounted on the vehicle, the bearing surfaces 11b, 12b, 13b, 14b of the first coupling part 11, the second coupling part 12, the third coupling part 13, and the fourth coupling part 14 are oriented toward the vehicle upper side while inclining toward the vehicle rear side, and are parallel to one another. As a rough position, the motor housing area 33 should be disposed between the first coupling part 11 and the second coupling part 12, and between the third coupling part 13 and the fourth coupling part 14, in the vehicle width direction. As the stator of the motor 3 has relatively high rigidity, the stator part of the motor 3 and the first motive power source 81 can constitute a highly rigid structure through the first coupling part 11 to the fourth coupling part 14 that are coupled to the first motive power source 81.

In this embodiment, the fixing surface parts 41, 42 of the protector 40 are fixed between the coupling parts 11 to 14 located next to each other in the vehicle width direction (first direction), at positions offset in the vehicle up-down direction (a direction intersecting the first direction). In this example, the fixing surface parts 41, 42 of the protector 40 are mounted on a first mounting part 21 and a second mounting part 22 provided in the housing 10. The fixing surface parts 41, 42, etc., of the protector 40 will be described later.

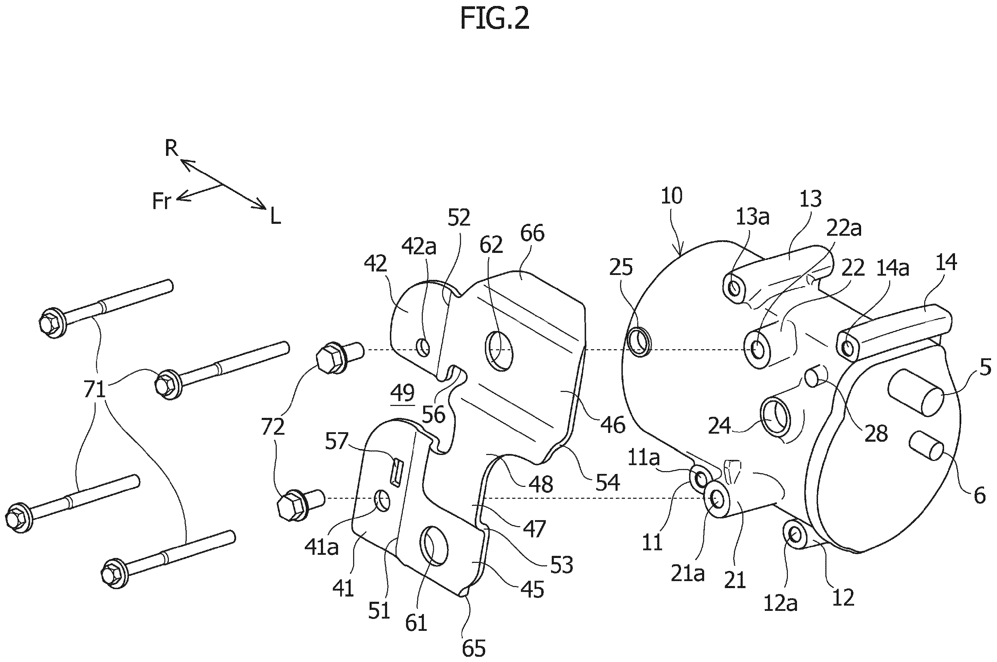

The first mounting part 21 is provided between the first coupling part 11 and the second coupling part 12 in the vehicle width direction (first direction), and is disposed so as to be somewhat offset from the first coupling part 11 and the second coupling part 12 toward the upper side. The second mounting part 22 is disposed between the third coupling part 13 and the fourth coupling part 14 in the vehicle width direction, and is disposed so as to be somewhat offset from the third coupling part 13 and the fourth coupling part 14 toward the lower side. The first mounting part 21 and the second mounting part 22 protrude from an outer circumferential surface of the main body of the housing 10, and the protrusion direction is oriented toward the vehicle front side while inclining upward (Figure 2). The inclination directions of the first mounting part 21 and the second mounting part 22 are parallel to the inclination direction of the first coupling part 11.

Bearing surfaces 21a, 22b are provided at front parts of the first mounting part 21 and the second mounting part 22, and the fixing surface parts 41, 42 of the protector 40 can contact these bearing surfaces 21b, 22b. In this example, the first mounting part 21 is provided with a first bolt hole 21a in which a protector fixing bolt 72 engages, and the bearing surface 21b is formed at a circumferential edge of the first bolt hole 21a at a front end of the first mounting part 21. The first fixing surface part 41, to be described later, of the protector 40, contacts this bearing surface 21b. The second mounting part 22 is provided with a second bolt hole 22a, and the bearing surface 22b is formed at a circumferential edge of the second bolt hole 22a at a front end of the second mounting part 22. The second fixing surface part 42, to be described later, of the protector 40 contacts this bearing surface 22b. In the state in which the electric compressor 1 is mounted on the vehicle, the bearing surfaces 21b, 22b of the first mounting part 21 and the second mounting part 22 are oriented toward the vehicle upper side while inclining toward the vehicle rear side, and are parallel to each other. The inclination directions of the bearing surfaces 21b, 22b of the first mounting part 21 and the second mounting part 22 correspond to the inclination directions of the first fixing surface part 41 and the second fixing surface part 42 of the protector 40.

The housing 10 is provided with a housing-side contact part 28 that the protector 40 contacts. In this example, as shown in Figure 4, the housing-side contact part 28 is disposed between the second coupling part 12 and the fourth coupling part 14 in the vehicle up-down direction, and is disposed on the left side of and spaced apart from the second mounting part 22 in the vehicle width direction (the longitudinal direction of the rotating shaft of the motor 3). The housing-side contact part 28 protrudes toward the protector 40, and a flat surface is formed at a leading end. This flat surface is configured to contact a second outer surface part 46, to be described later, of the protector 40. A receiving part 28a that a protector-side contact part 64, to be described later, contacts may be provided in the outer surface of the main body of the housing 10 (Figure 4).

The housing 10 has a refrigerant inflow port 24 through which the refrigerant flows in and a refrigerant discharge port 25 through which the refrigerant is discharged. The refrigerant inflow port 24 is provided in the outer circumferential surface of the housing 10 and, in this example, disposed between the second mounting part 22 and the housing-side contact part 28 in the vehicle width direction. The refrigerant discharge port 25 is disposed at a right-side end part of the outer circumferential surface of the housing 10, near the compression mechanism 2. A positioning projection 26 that protrudes from the outer circumferential surface of the housing 10 is provided on the outer circumferential surface. The positioning projection 26 is used to determine the position of the protector 40, and is inserted into a positioning part 57, to be described later. The positioning projection 26 is disposed between the first mounting part 21 and the second mounting part 22, near the first mounting part 21.

Next, the shape of the protector 40, etc., will be described in detail. The protector 40 is a plate-shaped member having a plurality of surface parts and a plurality of step parts. In this embodiment, the plurality of surface parts constituting parts of the protector 40 include the first fixing surface part 41, the second fixing surface part 42, a first outer surface part 45, the second outer surface part 46, and a third outer surface part 47. Furthermore, the protector 40 has a first flange part 65 and a second flange part 66. The plurality of step parts includes a first step part 51, a second step part 52, a third step part 53, and a fourth step part 54. In the following, each surface and each step will be described.

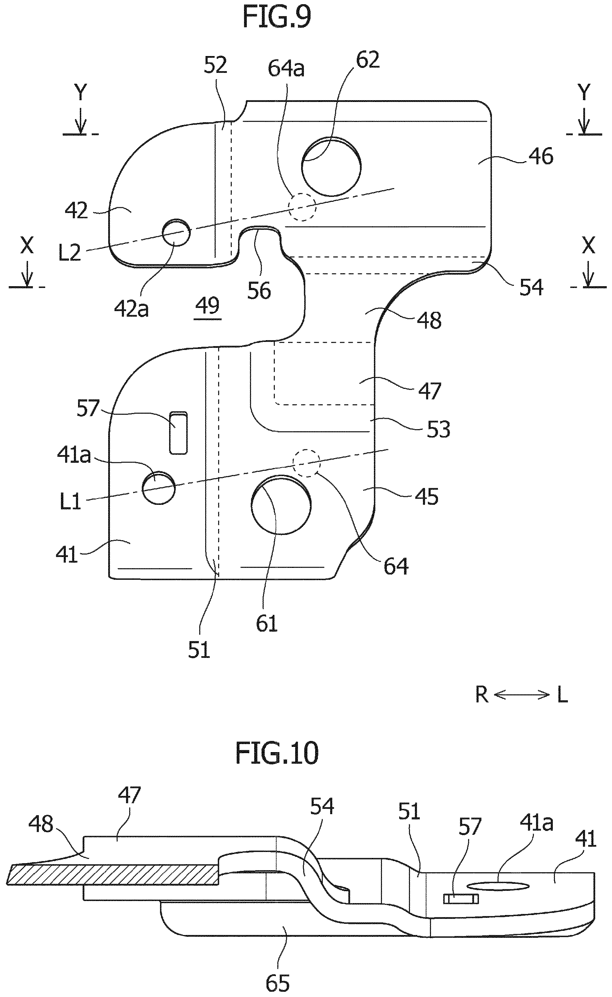

First, the first fixing surface part 41 will be described. As shown in Figure 1 to Figure 3, the first fixing surface part 41 is a part that is provided at a lower part of the protector 40, on the right side in the vehicle width direction, in the state in which the electric compressor 1 is mounted on the vehicle. As shown in Figure 9, the first fixing surface part 41 extends in the vehicle up-down direction, and a right upper-side part has an arc shape. A right-side end of the first fixing surface part 41 extends in the vehicle up-down direction, and a lower end of the first fixing surface part 41 extends in the vehicle width direction. A first mounting hole 41a through which the protector fixing bolt 72 is passed is formed in the first fixing surface part 41. The first mounting hole 41a is disposed at a middle part of the first fixing surface part 41 in the vehicle up-down direction, and is disposed so as to correspond to the first mounting part 21 of the housing 10. The protector fixing bolt 72 is passed through the first mounting hole 41a and is engaged with the first bolt hole 21a. In this case, the first fixing surface part 41 is fastened (fixed) to the bearing surface 21b of the first mounting part 21 as the protector fixing bolt 72 is tightened in a state in which a bearing surface at the head of the protector fixing bolt 72 is in contact with a bearing surface provided around the first mounting hole 41a. As described above, in the state in which the electric compressor 1 is mounted on the vehicle, the first fixing surface part 41 is oriented toward the vehicle upper side while inclining toward the vehicle rear side, and the inclination direction corresponds to the inclination direction of the bearing surface 21b of the first mounting part 21 of the housing 10.

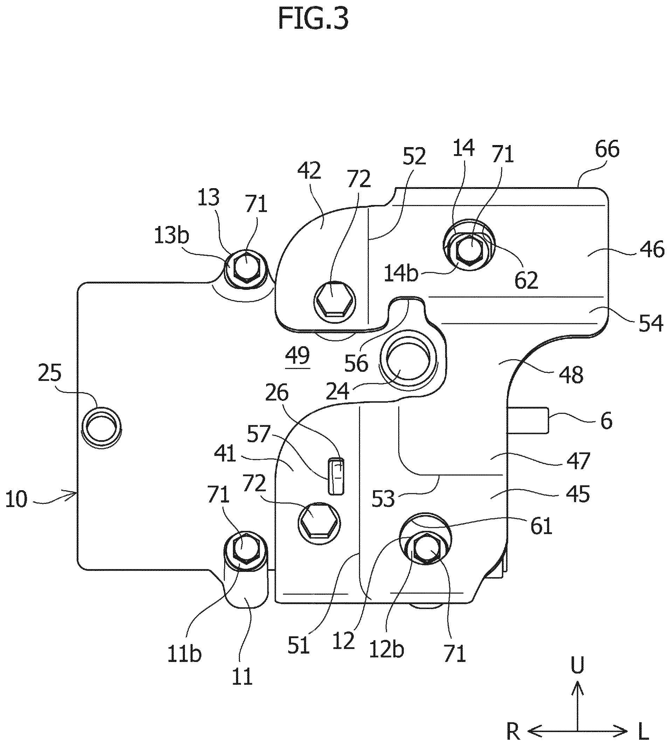

As shown in Figure 9, the first fixing surface part 41 is provided with a positioning part 57 through which the positioning projection 26 of the housing 10 is passed. The positioning part 57 has a substantially rectangular shape extending in the vehicle up-down direction, and as shown in Figure 1 and Figure 3, the positioning projection 26 is inserted into the long hole of the positioning part 57 with a predetermined fitting tolerance.

As shown in Figure 9, the second fixing surface part 42 is a part that is provided at an upper part of the protector 40, on the right side in the vehicle width direction, in the state in which the electric compressor 1 is mounted on the vehicle. The second fixing surface part 42 is disposed on the vehicle upper side of, and spaced apart from, the first fixing surface part 41. The clearance 49 is formed between the first fixing surface part 41 and the second fixing surface part 42. A right upper-side part of the second fixing surface part 42 has an arc shape. A lower end of the second fixing surface part 42 extends in the vehicle width direction. A second mounting hole 42a through which the protector fixing bolt 72 is passed is formed in the second fixing surface part 42, and the second mounting hole 42a is disposed so as to correspond to the second mounting part 22 of the housing 10. The second fixing surface part 42 is fastened (fixed) to the second mounting part 22 with the protector fixing bolt 72. The second fixing surface part 42 is inclined in the same manner as the first fixing surface part 41. The clearance 49 is formed such that the refrigerant inflow port 24 is accessible when the protector 40 is mounted on the housing.

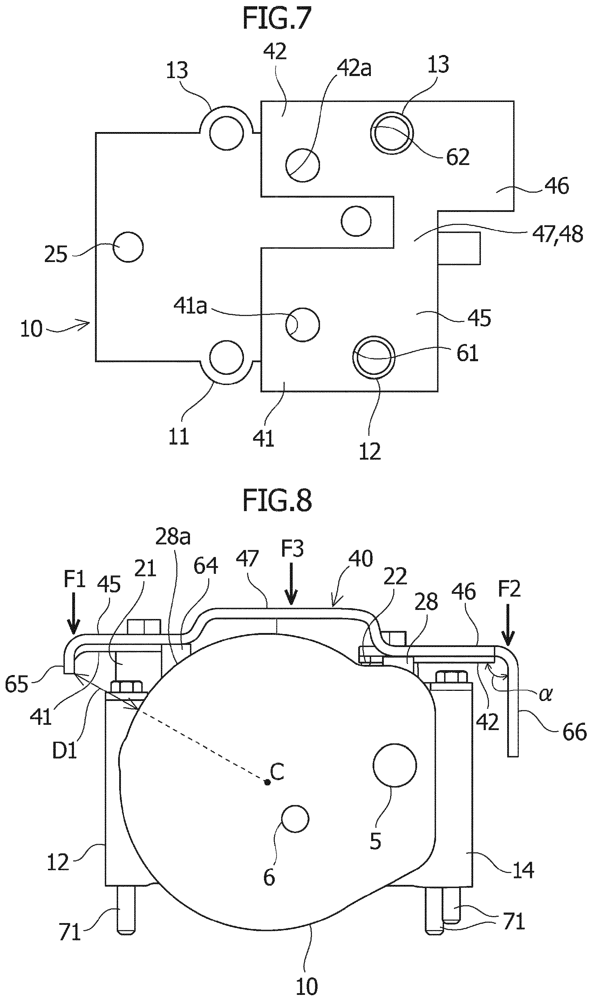

In this embodiment, as shown in Figure 6 and Figure 8, the first outer surface part 45, the second outer surface part 46, and the third outer surface part 47 are located outward of the first fixing surface part 41 and the second fixing surface part 42 in the outward direction of the housing 10 oriented from the inside toward the outside of the housing 10. When the electric compressor 1 is mounted on the vehicle as shown in Figure 1, the first outer surface part 45, the second outer surface part 46, and the third outer surface part 47 are disposed on the vehicle front side relative to the first fixing surface part 41 and the second fixing surface part 42.

First, the first outer surface part 45 will be described. As shown in Figure 9 to Figure 12, the first outer surface part 45 is disposed on the left side of the first fixing surface part 41 in the vehicle width direction, and is disposed on the vehicle front side relative to the first fixing surface part 41 in the vehicle front-rear direction. As shown in Figure 1 and Figure 3, the first outer surface part 45 is provided with the first insertion part 61 that extends through the first outer surface part 45 in the vehicle front-rear direction. The first insertion part 61 is disposed so as to correspond to the second coupling part 12. Thus, even in the state in which the protector 40 is mounted on the housing 10, the housing fixing bolt 71 of the second coupling part 12 can be tightened through the first insertion part 61. The first outer surface part 45 is reduced in rigidity at the part where the first insertion part 61 is provided. Thus, the first insertion part 61 is provided as one of the aforementioned deformation inducing parts.

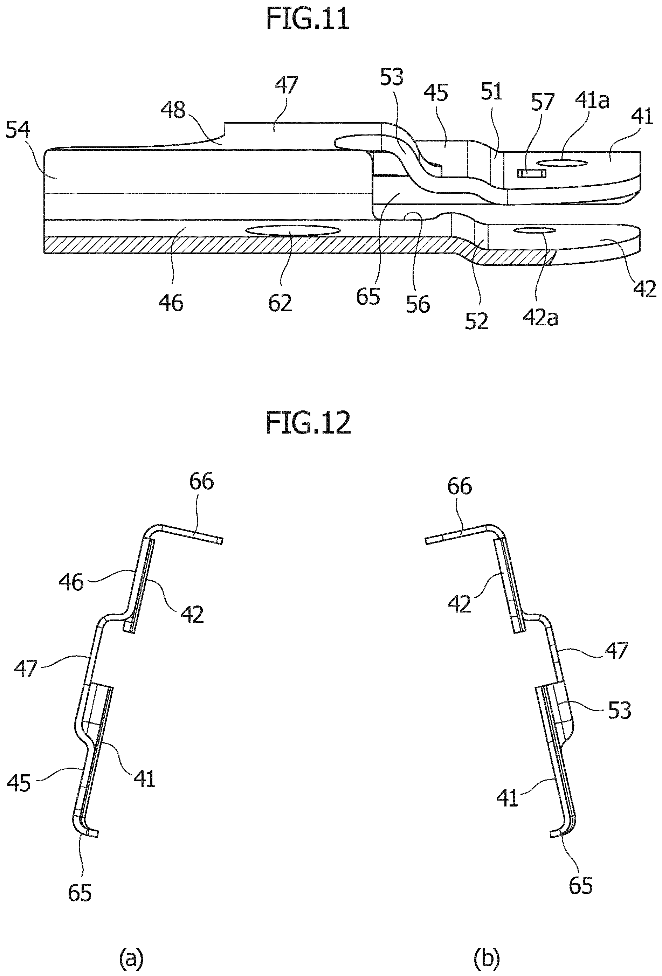

The first step part 51 is provided between the first fixing surface part 41 and the first outer surface part 45. As shown in Figure 10 and Figure 11, the first step part 51 is formed so as to extend leftward from a left end of the first fixing surface part 41 while inclining toward the vehicle front side and connect to the first outer surface part 45. In this example, the first fixing surface part 41 and the first outer surface part 45 are connected to each other so as to be smoothly continuous through the first step part 51 having a gentle inclination. The rigidity of the first step part 51 is set to be lower than that of the first fixing surface part 41 and the first outer surface part 45. Thus, the first step part 51 is provided as the aforementioned deformation inducing part.

As shown in Figure 6 and Figure 8, the first outer surface part 45 is disposed spaced apart from the housing 10. In this example, the first outer surface part 45 is disposed spaced apart from the bearing surface 12b of the second coupling part 12 of the housing 10. The first flange part 65 is provided at an end of the first outer surface part 45. The first flange part 65 extends in a direction toward the housing 10, orthogonally to the first outer surface part 45, and has a so-called free end.

As shown in Figure 1 to Figure 3, the second outer surface part 46 is disposed on the left side of the second fixing surface part 42 in the vehicle width direction, and is disposed on the vehicle front side relative to the second fixing surface part 42 in the vehicle front-rear direction. As shown in Figure 3, the second outer surface part 46 extends in the vehicle width direction, and an upper portion in the vehicle up-down direction in a left-side part in the vehicle width direction of the second outer surface part 46 is disposed so as to overlap the high-voltage wire connector 5. As shown in Figure 7 in a simplified manner, the protector 40 should at a minimum be able to protect the high-voltage wire connector 5. Like the first outer surface part 45, the second outer surface part 46 is provided with a second insertion part 62 that extends through the second outer surface part 46 in the vehicle front-rear direction. The second insertion part 62 is disposed so as to correspond to the fourth coupling part 14. Thus, the housing fixing bolt 71 of the fourth coupling part 14 can be tightened through the second insertion part 62 as with the first insertion part 61. The rigidity of the second outer surface part 46 is reduced at the part where the second insertion part 62 is provided. Thus, the second insertion part 62 is also provided as one of the aforementioned deformation inducing parts. In this embodiment, the second outer surface part 46 is disposed so as to overlap the high-voltage wire connector 5, but the second side surface 46, for example, of the protector 40 may be disposed so as to overlap both the high-voltage wire connector 5 and the low-voltage wire connector 6.

The second step part 52 is provided between the second fixing surface part 42 and the second outer surface part 46. As shown in Figure 10 and Figure 11, the second step part 52 extends leftward from a left end of the second fixing surface part 42 while inclining toward the vehicle front side, and connects to the second outer surface part 46. The second fixing surface part 42 and the second outer surface part 46 are connected to each other so as to be smoothly continuous by the second step part 52 having a gentle inclination. The second outer surface part 46 is disposed spaced apart from the housing 10. In this example, the second outer surface part 46 is disposed spaced apart from the bearing surface 14b of the fourth coupling part 14 of the housing 10. As shown in Figure 8, a second flange part 66 is provided at an end of the second outer surface part 46 as in the first outer surface part 45. The second flange part 66 extends in the direction toward the housing 10, orthogonally to the second outer surface part 46, and has a so-called free end. The distance that the second flange part 66 extends from the second outer surface part 46 is set to be longer than the distance that the first flange part 65 extends from the first outer surface part 45.

Next, the third outer surface part 47 will be described. As shown in Figure 9, the third outer surface part 47 is a part that extends so as to connect the first outer surface part 45 and the second outer surface part 46 to each other. In the state in which the electric compressor 1 is mounted on the vehicle, the third outer surface part 47 extends in the vehicle up-down direction so as to connect right-side parts of the first outer surface part 45 and the second outer surface part 46 to each other. In this embodiment, a two-pronged shape (U-shape) is formed by the three outer surface parts 45 to 47, the two fixing surface parts 41, 42, and the clearance 49. Like the first outer surface part 45 and the second outer surface part 46, the third outer surface part 47 is disposed spaced apart from the housing 10, and is disposed farther on the vehicle front side relative to the first outer surface part 45 and the second outer surface part 46. When an external force F3 (Figure 8) acts on the third outer surface part 47, a larger amount of deformation can be secured by the longer distance to the housing 10. In this embodiment, a recess part 56 recessed toward the vehicle upper side is provided at an upper portion of a left-side part of the clearance 49 (a part corresponding to the bottom of the two-pronged shape). The recess part 56 is formed so as to separate the second step part 52 and the fourth step part 54 that extend in different directions from each other. Thus, providing the recess part 56 helps the second step part 52 and the fourth step part 54 deform independently.

As shown in Figure 9 to Figure 12, the third outer surface part 47 is connected to the first outer surface part 45 through the third step part 53, and is connected to the second outer surface part 46 through the fourth step part 54. First, a connection of the third outer surface part 47 and the first outer surface part 45 will be described. A lower end and a lower part on the right side of the third outer surface part 47 are connected to the first outer surface part 45 through the L-shaped third step part 53. The third step part 53 as a whole protrudes from the first outer surface part 45 toward the vehicle front side while curving. The third step part 53 disposed on the lower side of the third outer surface part 47 extends in the vehicle width direction, and extends from an upper part of the first outer surface part 45 toward the vehicle front side while inclining upward to be smoothly connected to the lower part of the third outer surface part 47. The third step part 53 disposed at the lower part on the right side of the third outer surface part 47 extends in the vehicle up-down direction, and extends from the left-side part of the first outer surface part 45 toward the vehicle front side while inclining toward the left side in the vehicle width direction to be smoothly connected to the lower part on the right side of the third outer surface part 47.

Next, a connection of the third outer surface part 47 and the second outer surface part 46 will be described. As shown in Figure 9 to Figure 11, an upper part of the third outer surface part 47 is connected to the second outer surface part 46 through the fourth step part 54. The fourth step part 54 protrudes from the second outer surface part 46 toward the vehicle front side while curving. The fourth step part 54 extends in the vehicle width direction, and extends from a lower part of the second outer surface part 46 toward the vehicle front side while inclining downward to be smoothly connected to the upper part of the third outer surface part 47.

The rigidity of the third step part 53 and the fourth step part 54 is set to be lower than that of the first outer surface part 45, the second outer surface part 46, and the third outer surface part 47. Thus, the third step part 53 and the fourth step part 54 are also provided as ones of the aforementioned deformation inducing parts.

As shown in Figure 9, at a middle part of the third outer surface part 47 in the vehicle up-down direction, a narrow part 48 is provided at which the length in the vehicle width direction is set to be shorter than at the upper end and the lower end. Thus, the rigidity of the third outer surface part 47 is set to be lower at the narrow part 48 than at the upper end and the lower end. Thus, the narrow part 48 is provided as one of the aforementioned deformation inducing parts.

As shown in Figure 8, the protector 40 of this embodiment is provided with the protector-side contact part 64. While this is not shown in detail in the drawings, the protector-side contact part 64 is configured to protrude toward the housing 10, and to contact the outer surface of the main body of the housing 10 when the protector 40 is fixed on the housing 10. For example, the protector-side contact part 64 may be configured to contact the receiving part 28a provided in the main body of the housing 10. It is also possible to omit the housing-side contact part 28 and provide a protector-side contact part so as to contact a position corresponding to the housing-side contact part 28. In this case, the two protector-side contact parts contact the housing 10.

As described above, the protector 40 of this embodiment has the outer surface parts (the first outer surface part 45, the second outer surface part 46, and the third outer surface part 47) that are located outward of the fixing surface parts (the first fixing surface part 41 and the second fixing surface part 42) in the outward direction of the housing 10 oriented from the inside toward the outside of the housing 10, and the outer surface parts 45 to 47 are provided with the deformation inducing parts. Providing the outer surface parts 45 to 47 outward of the fixing surface parts 41, 42 helps bear an external force by the outer surface parts 45 to 47, and makes it possible, when an external force is transmitted to the outer surface parts 45 to 47, to absorb the external force by causing deformation of the peripheries of the deformation inducing parts, and thus, consuming the external force as deformation energy of the outer surface parts 45 to 47. As a result, the external force transmitted to the housing 10 can be reduced.

As described above, the housing 10 has the coupling parts 11 to 14 for coupling the housing 10 to the first motive power source 81 constituting a part of the vehicle, such as an engine, through the coupling members, such as the housing fixing bolts 71, and the coupling parts 11 to 14 are provided with the bearing surfaces 11b to 14b that face the protector 40. Here, the deformation inducing parts include, at the positions facing the bearing surfaces 12b, 14b, the insertion parts 61, 62 into which the coupling members are insertable. As described above, the insertion parts 61, 62 are disposed at the positions corresponding to the coupling parts 12, 14. This configuration makes it possible to induce deformation of the peripheries of the insertion parts 61, 62 and absorb an external force as deformation energy of the peripheries of the insertion parts. In addition, it is possible to easily mount the electric compressor 1 to the vehicle, as the housing 10 can be coupled to the vehicle with the housing fixing bolts 71 in the state in which the protector 40 is fixed on the housing 10.

In this embodiment, the plurality of coupling parts (the first coupling part 11 to the fourth coupling part 14) is provided, and a plurality of coupling parts, for example, the first coupling part 11 and the second coupling part 12 are disposed spaced apart from each other along the first direction (e.g., the vehicle width direction) in which the compression mechanism 2 and the electrically operated units are located next to one another. The fixing surface (e.g., the first fixing surface part 41) is fixed at a position that is between the first coupling part 11 and the second coupling part 12 located next to each other in the first direction, and that is offset in the direction (up-down direction) intersecting the first direction. Thus, an external force transmitted from the fixing surface parts 41, 42 to the housing 10 can be transmitted (dispersed) toward the vehicle body from the bearing surfaces 21b, 22b on both sides in the direction in which the fixing surface parts are located next to each other, and the load transmitted from the housing 10 to the electrically operated units can be reduced.

The protector 40 has a plate shape, and as described above, the deformation inducing parts include the step parts (the first step part 51 and the second step part 52) that are provided between the fixing surface parts 41, 42 and the outer surface parts 45, 46. This configuration makes it possible to induce deformation in the peripheries of the first step part 51 and the second step part 52 when an external force is applied. Furthermore, since the protector 40 is formed as one plate from the fixing surface parts 41, 42 to the outer surface parts 45, 46, the outer surface parts 45, 46 deform more easily for the offset at a position between the fixing surface parts 41, 42 and the outer surface parts 45, 46 that is formed by the step parts 51, 52. As a result, an external force can be effectively absorbed by the first step part 51 and the second step part 52.

The coupling parts 11 to 14 are provided at both side parts of the housing 10 in the second direction intersecting the first direction (the vehicle up-down direction intersecting the vehicle width direction). In this example, these coupling parts correspond to the first coupling part 11 and the third coupling part 13 or to the second coupling part 12 and the fourth coupling part 14. In this example, the fixing surface parts 41, 42 and the outer surface parts 45, 46 are disposed at both side parts of the protector 40 in the second direction. That is, the first fixing surface part 41 and the first outer surface part 45 are disposed at a lower part in the second direction (vehicle up-down direction), and the second fixing surface part 42 and the second outer surface part 46 are disposed at an upper part in the second direction (vehicle up-down direction). Furthermore, the clearance 49 is formed between the fixing surface parts 41, 42 on both sides in the second direction or between the outer surface parts 45, 46 on both sides in the second direction. In this configuration, the first fixing surface part 41 and the second fixing surface part 42 are disposed spaced apart from each other, and the contact areas of the first outer surface part 45 and the second outer surface part 46 can be also reduced. When an external force is transmitted to the outer surface on one side (e.g., the first outer surface part 45), the external force transmitted to the other outer surface (e.g., the second outer surface part 46) can be reduced and deformation of the outer surface 45 or 46 on one side can be promoted.

The protector 40 of this embodiment has the connection part (e.g., the third outer surface part 47) that connects the outer surface parts (e.g., the first outer surface part 45 and the second outer surface part 46) on both sides in the second direction (vehicle up-down direction) to each other. The clearance between the first fixing surface part 41 and the second fixing surface part 42 is formed so as to extend over the outer surface parts on both sides, the fixing surface parts on both sides, and the connection part. Thus, the protector 40 has a two-pronged shape due to the clearance. For example, compared with a member that is formed in a rectangular plate shape, when an external force is transmitted to the outer surface on one side, the external force is less likely to be transmitted to the other outer surface, so that deformation of the outer surface on one side can be promoted.

In this embodiment, the first insertion part 61 constituting the deformation inducing part is disposed spaced apart from the housing 10. The protector 40 has the fixing part (in this example, the center of the hole of the first mounting hole 41a of the first fixing surface part 41) that is provided in the plane of the fixing surface parts 41, 42 and fixed to the housing 10, and the protector-side contact part 64 that is disposed spaced apart from the fixing part, on the end side of the electrically operated unit, and contacts the housing 10. Here, the end side of the electrically operated unit is an end part in the direction in which the motor 3 and the inverter 4 are disposed (vehicle width direction), and is the left-side end in this example. That is, the end side is the position where the receiving part 28a is indicated in Figure 4. As shown in Figure 9, the first insertion part 61 is disposed on a virtual line L1 connecting the fixing part (the center of the hole) of the first fixing surface part 41 and the center of the protector-side contact part 64 to each other, or is disposed so as to be offset toward the outer side of the virtual line L1 (in this example, toward the lower side). The virtual line L1 extends toward the left side in the vehicle width direction while inclining toward the vehicle upper side when the electric compressor 1 is mounted on the vehicle, and the angle formed on the left side by the virtual line L1 and a horizontal line is an acute angle. The outer side from the virtual line L1 is a direction toward one end of the ends of the protector 40 in the up-down direction that is closer to the virtual line L1. While the virtual line L2 in Figure 9 connects the fixing point of the second fixing surface part 42 and a receiving part 64a to each other, the protector-side contact part 64 may be provided at the receiving part 64a. In this case, the second insertion part 62 may be disposed on the virtual line L2 or disposed so as to be offset toward the outer side (upper side) from the virtual line L2.

Since the protector 40 is supported by the fixing part of the first fixing surface part 41 and the protector-side contact part 64, whereas the parts other than these parts are disposed spaced apart from the housing 10, when an external force acts around the first flange part 65, for example, the external force can be absorbed as the protector 40 bends at the supported parts.

In the case in which the housing 10 has a substantially cylindrical shape, as shown in Figure 8, the protector 40 extends in the direction of a tangent to the cylindrical housing 10 (i.e., a straight line orthogonal to a straight line connecting a center C (virtual rotation center point) of the circular shape of the housing 10 and the outer circumferential surface of the housing 10 to each other). Thus, the radial distance between the end of the protector 40 and the housing 10 (D1 in Figure 8) becomes longer as the protector 40 extends farther outward (as the dimension in the up-down direction increases), and the allowance for deformation of the first outer surface part 45 becomes larger. Since the first insertion part 61 is provided, more of the external force can be absorbed as the first insertion part 61 deforms to a greater extent. The same applies to the second fixing surface part 42.

As shown in Figure 8, as for deformation at the second flange part 66, since the length of the second flange part 66 is longer than the length of the first flange part 65, for example, when an external force F2 acts on the protector 40, the protector 40 deforms such that an angle α formed by the second flange part 66 and the second outer surface part 46 becomes larger (opens). Thus, the impact can also be absorbed as the second flange part 66 deforms away from the first outer surface part 45.

In this embodiment, the protector 40 is disposed on the vehicle outer side relative to the housing 10, and the direction in which the coupling members (housing fixing bolts 71) are inserted into the member constituting a part of the vehicle (in this example, the first motive power source 81) is inclined relative to the vehicle front-rear direction or the vehicle width direction. Like the inclination directions of the first coupling part 11, etc., the insertion direction of the coupling members is oriented toward the vehicle rear side while inclining toward the vehicle lower side. For example, when the front part of the vehicle is subjected to an impact load acting from the front side toward the rear side in this embodiment, the coupling direction (inclination direction) of the coupling members is inclined relative to the direction in which the load is applied. Thus, at least either the coupling members (housing fixing bolts 71) or the coupling parts (e.g., the first to fourth coupling parts 11 to 14) is more likely to get damaged, and as these members are damaged, the electric compressor 1 comes off the member constituting a part of the vehicle (first motive power source 81) and moves upward, for example, relative to the direction in which the impact load (external force) is applied, which can reduce the damage to the electrically operated units 3, 4. In this example, the electric compressor 1 is less likely to get stuck between the bumper member 84 and the first motive power source 81 in the event of a frontal collision.

In this embodiment, the insertion direction of the coupling members is oriented toward the vehicle rear side while inclining toward the vehicle lower side, but the present invention is not limited thereto. For example, the insertion direction may be oriented toward the vehicle rear side while inclining toward the vehicle upper side. The insertion direction may be inclined toward one side in the vehicle width direction (the right side or the left side) relative to the vehicle front-rear direction. Thus, the insertion direction may be oriented toward the vehicle rear side while inclining toward one side in the vehicle width direction. As shown in Figure 6, it is preferable that a side surface of the member constituting a part of the vehicle that faces the electric compressor 1 be inclined in the direction intersecting the insertion direction. Thus, the facing side surface functions as a guide part and helps move the electric compressor 1 to a desired position. That is, since the side surface of the member constituting a part of the vehicle that faces the electric compressor 1 is inclined in the direction intersecting the insertion direction, it is possible to easily move the electric compressor 1 in an intended direction when an impact load is applied.

The electric compressor 1 of this embodiment makes it possible to reduce the damage of the units to be protected (electrically operated units) by reducing the impact on the unit to be protected (electrically operated units) in the event of a collision. Since the impact of a collision is released through buckling of the protector 40, it is possible to reduce the plate thickness and the size of the protector 40 and thereby achieve a weight reduction. Furthermore, it is possible to secure a required capacity of the electric compressor 1 while securing the ease of installation to the vehicle.

Moreover, since the electric compressor 1 can be installed to the vehicle in the state in which the protector 40 is mounted on the housing 10, it is possible to reduce the takt time of the process of installing the electric compressor 1 to the first motive power source, etc., in a vehicle manufacturing line. Furthermore, as the protector 40 functions as one mass, the vibration level of the electric compressor 1 can be lowered, so that, for example, the resonance point of the electric compressor 1 and the resonance point on the vehicle body side (the first motive power source etc.) can be offset from each other to thereby improve the NV performance.

The description of this embodiment is an indication of an example for describing the present invention and is not intended to limit the invention stated in the claims. Also, the configurations of the respective portions of the present invention are not limited to those of the above embodiment, and various modifications can be made within the technical scope of the claims.

In this embodiment, the electric compressor 1 is disposed between the radiator 85 and the first motive power source 81 in the vehicle front-rear direction, but the present invention is not limited thereto. For example, the electric compressor 1 may be disposed inside the motive power compartment 80, between the first motive power source 81 and the side member 83 in the vehicle width direction. In this case, the protector 40 should be disposed so as to face the side member 83. That is, in this embodiment, the housing 10 of the electric compressor 1 and the protector 40 are disposed in the vehicle front-rear direction, but the present invention is not limited thereto, and they may be disposed next to each other in the vehicle width direction or may be disposed next to each other in the vehicle up-down direction.

The electric compressor 1 of this embodiment is installed in a vehicle, but the present invention is not limited thereto. For example, the electric compressor 1 may be disposed in a factory facility, etc.

In this embodiment, the protector 40 has the clearance provided between the first fixing surface part 41 and the second fixing surface part 42, but the present invention is not limited thereto. For example, the part corresponding to the clearance may be reduced in thickness. In this embodiment, the housing-side contact part 28 is provided, but the present invention is not limited thereto. Instead of the housing-side contact part 28, the protector-side contact part 64 may be provided at the position corresponding to the housing-side contact part 28.

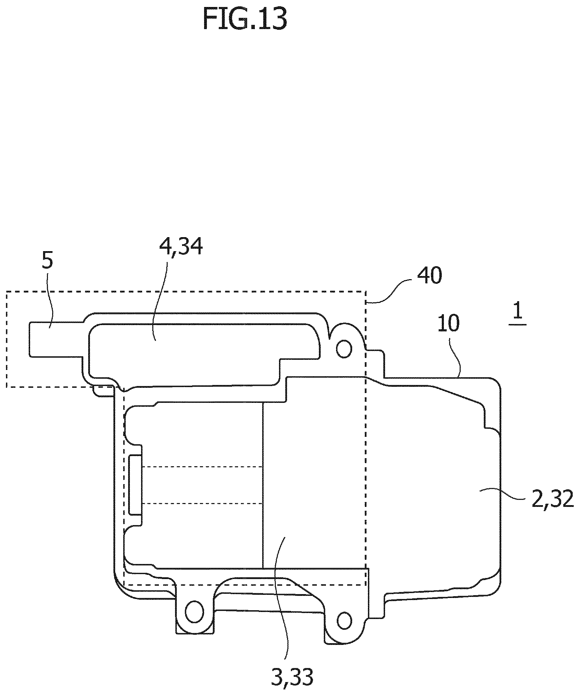

In this embodiment, the compression mechanism 2, the motor 3, and the inverter 4 are located next to one another in a straight line, but the present invention is not limited thereto. For example, as shown in Figure 13, the compression mechanism 2, the motor 3, and the inverter 4 may be disposed in a substantially L-shape. in this case, the protector 40 should be disposed so as to protect the motor 3 and the inverter 4. In this case, the protector 40 should be configured to also protect the connectors of the inverter 4.

### [Reference Signs List]

- 1: Electric compressor
- 2: Compression mechanism
- 3: Motor
- 4: Inverter
- 5: First connector
- 6: Second connector
- 10: Housing
- 11: First coupling part
- 11a: First hole
- 11b: Bearing surface
- 12: Second coupling part
- 12a: Second hole
- 12b: Bearing surface
- 13: Third coupling part
- 13a: Third hole
- 13b: Bearing surface
- 14: Fourth coupling part
- 14a: Fourth hole
- 14b: Bearing surface
- 21: First mounting part
- 21a: First bolt hole
- 21b: Bearing surface
- 22: Second mounting part
- 22a: First bolt hole
- 22b: Bearing surface
- 24: Refrigerant inflow port
- 25: Refrigerant discharge port
- 26: Positioning projection
- 28: Housing-side contact part
- 28a: Receiving part
- 32: Compressor housing area
- 33: Motor housing area
- 34: Inverter housing area
- 37: Partition
- 40: Protector
- 41: First fixing surface part
- 41a: First mounting hole
- 42: Second fixing surface part
- 42a: Second mounting hole
- 45: First outer surface part
- 46: Second outer surface part
- 47: Third outer surface (connection part)
- 48: Narrow part (deformation inducing part)
- 51: First step part (deformation inducing part)
- 52: Second step part (deformation inducing part)
- 53: Third step part (deformation inducing part)
- 54: Fourth step part (deformation inducing part)
- 56: Recess part
- 57: Positioning part
- 61: First insertion part (deformation inducing part)
- 62: Second insertion part (deformation inducing part)
- 64: Protector-side contact part
- 65: First flange part
- 66: Second flange part
- 71: Housing fixing bolt (coupling member)
- 72: Protector mounting bolt
- 80: Motive power compartment
- 81: First motive power source
- 82: Second motive power source
- 83: Side member
- 84: Bumper member
- 85: Radiator
- 86: Front wheel

## Claims

1. An electric compressor structure including:
a compression mechanism (2) that compresses refrigerant;
an electrically operated unit (3, 4) that drives the compression mechanism (2) by electricity;
a housing (10) that houses the compression mechanism (2) and the electrically operated unit (3, 4); and
a protector (40) that has a fixing surface part (41, 42) to be fixed to the housing (10) and is disposed on an outer side of the housing (10), at a position facing the electrically operated unit (3, 4),
the electric compressor structure being **characterized in that** a deformation inducing part (51-54, 61, 62) that induces deformation when a load acts on the protector (40) from an outside, is provided in the protector (40), at a position facing the electrically operated unit (3, 4).

2. The electric compressor structure according to claim 1, wherein:
the protector (40) has an outer surface part (45, 46) that is located outward of the fixing surface part (41, 42) in a housing (10) outward direction oriented from an inside toward an outside of the housing (10); and
the deformation inducing part (51-54, 61, 62) is provided in the outer surface part (45, 46).

3. The electric compressor structure according to claim 1 or claim 2, wherein:
the housing (10) has a coupling part (11-14) for coupling the housing (10) to a member constituting a part of a vehicle through a coupling member (71);
the coupling part (11-14) is provided with a bearing surface (11b-14b) that faces the protector (40); and
the deformation inducing part (51-54, 61, 62) includes an insertion part (61, 62) which is provided at a position facing the bearing surface (11b-14b) and into which the coupling member (71) is insertable.

4. The electric compressor structure according to claim 3, wherein:
the housing (10) is provided with a plurality of coupling parts (11-14);
the plurality of coupling parts (11-14) is disposed spaced apart along a first direction in which the compression mechanism (2) and the electrically operated unit (3, 4) are located next to each other; and
the fixing surface part (41, 42) is fixed at a position that is between the coupling parts (11-14) located next to each other in the first direction and that is offset in a direction intersecting the first direction.

5. The electric compressor structure according to claim 2, wherein:
the protector (40) is a plate-shaped member; and
the deformation inducing part (51-54, 61, 62) includes a step part (51, 52) that is provided between the fixing surface part (41, 42) and the outer surface part (45, 46).

6. The electric compressor structure according to claim 5, wherein:
the coupling parts (11-14) are provided on both sides of the housing (10) in a second direction that intersects a first direction in which the compression mechanism (2) and the electrically operated unit (3, 4) are located next to each other;
the fixing surface part (41, 42) and the outer surface part (45, 46) are disposed on each of both sides of the protector (40) in the second direction; and
a clearance is formed between the fixing surface parts (41, 42) on both sides in the second direction or between the outer surface parts (45, 46) on both sides in the second direction.

7. The electric compressor structure according to claim 6, wherein:
the protector (40) has a connection part that connects the outer surface parts (45, 46) on both sides in the second direction to each other;
the clearance is formed so as to extend over the outer surface parts (45, 46) on both sides, the fixing surface parts (41, 42) on both sides, and the connection part (47); and
the protector (40) has a two-pronged shape due to the clearance.

8. The electric compressor structure according to claim 1, wherein:
the deformation inducing part (51-54, 61, 62) is disposed spaced apart from the housing (10);
the protector (40) has:
a fixing part that is provided in a plane of the fixing surface part (41, 42) and fixed to the housing (10); and
a contact part (64) that is disposed on an end side of the electrically operated unit (3, 4) so as to be spaced apart from the fixing part and contacts the housing (10); and
the deformation inducing part (51-54, 61, 62) is disposed on a virtual line (L1) connecting the fixing part and the contact part to each other, or is disposed outward of the virtual line (L1).

9. The electric compressor structure according to claim 1, wherein:
the housing (10) has a coupling part (11-14) for coupling the housing (10) to a member constituting a part of a vehicle through a coupling member (71);
the coupling part (11-14) is provided with a bearing surface (11b-14b) that faces the protector (40);
the protector (40) is disposed on a vehicle outer side relative to the housing (10);
a deformation inducing part (51-54, 61, 62) that induces deformation when a load acts from the vehicle outer side is provided in the protector (40), at a position facing the electrically operated unit (3, 4);
the deformation inducing part (51-54, 61, 62) includes an insertion part (61, 62) which is provided at a position facing the bearing surface (11b-14b) and into which the coupling member (71) is insertable; and
a direction in which the coupling member (71) is inserted into the member constituting a part of the vehicle is inclined relative to a vehicle front-rear direction or a vehicle width direction.

10. A protector (40) for an electric compressor that protects an electric compressor having a compression mechanism (2) that compresses refrigerant, an electrically operated unit (3, 4) that drives the compression mechanism (2) by electricity, and a housing (10) that houses the compression mechanism (2) and the electrically operated unit (3, 4),
the protector (40) for an electric compressor being **characterized in that**:
the protector (40) is disposed on an outer side of the housing (10), at a position facing the electrically operated unit (3, 4); and
the protector (40) has:
a fixing surface part (41, 42) that is fixed to the housing (10); and
a deformation inducing part (51-54, 61, 62) that is configured to deform when a load acts on the protector (40) from an outside, and is provided at a position facing the electrically operated unit (3, 4).

## Patentansprüche

1. Elektrische Verdichterstruktur, umfassend:
einen Verdichtungsmechanismus (2), welcher ein Kühlmittel verdich-tet;
eine elektrisch betriebene Einheit (3, 4), welche den Verdichtungsme-chanismus (2) durch Elektrizität antreibt;
ein Gehäuse (10), welches den Verdichtungsmechanismus (2) und die elektrisch betriebene Einheit (3, 4) aufnimmt; und
eine Schutzvorrichtung (40), welche einen befestigenden Flächenteil (41, 42) aufweist, um an dem Gehäuse (10) befestigt zu sein, und welche an einer Außenseite des Gehäuses (10), an einer Position angeordnet ist, welche der elektrisch betriebenen Einheit (3, 4) zugewandt ist,
wobei die elektrische Verdichterstruktur **dadurch gekennzeichnet ist, dass** ein Deformations-induzierender Teil (51-54, 61, 62), welcher eine De-formation induziert, wenn eine Last von einer Außenseite auf die Schutz-vorrichtung (40) wirkt, in der Schutzvorrichtung (40) an einer Position be-reitgestellt ist, welche der elektrisch betriebenen Einheit (3,4) zugewandt ist.

2. Elektrische Verdichterstruktur nach Anspruch 1, wobei:
die Schutzvorrichtung (40) einen äußeren Flächenteil (45, 46) auf-weist, welcher sich außerhalb des befestigenden Flächenteils (41, 42) in einer Gehäuse(10)-Außenrichtung befindet, welche von einer Innenseite zu einer Außenseite des Gehäuses (10) orientiert ist, und
der Deformations-induzierende Teil (51-54, 61, 62) in dem äußeren Flächenteil (45, 46) bereitgestellt ist.

3. Elektrische Verdichterstruktur nach Anspruch 1 oder Anspruch 2, wobei:
das Gehäuse (10) einen Kopplungsteil (11-14) für ein Koppeln des Gehäuses (10) durch ein Kopplungselement (71).an ein Element, welches einen Teil eines Fahrzeugs bildet;
der Kopplungsteil (11-14) mit einer Lagerfläche (11b-14b) bereitge-stellt ist, welche der Schutzvorrichtung (40) zugewandt ist, und
der Deformations-induzierende Teil (51-54, 61, 62) einen Einfügeteil (61, 62) umfasst, welcher an einer Position bereitgestellt ist, welche der La-gerfläche (11b-14b) zugewandt ist, und in welchen das Kupplungselement (71) einfügbar ist.

4. Elektrische Verdichterstruktur nach Anspruch 3, wobei:
das Gehäuse (10) mit einer Mehrzahl von Kopplungsteilen (11-14) be-reitstellt ist,
die Mehrzahl der Kopplungsteile (11-14) entlang einer ersten Rich-tung voneinander beabstandet angeordnet ist, in welcher der Verdich-tungsmechanismus (2) und die elektrisch betriebene Einheit (3, 4) neben-einander angeordnet sind, und
der befestigende Flächenteil (41, 42) an einer Position befestigt ist, welche zwischen den Kopplungsteilen (11-14), welche in der ersten Rich-tung benachbart zueinander sind, und welche in einer Richtung versetzt ist, welche die erste Richtung kreuzt.

5. Elektrische Verdichterstruktur nach Anspruch 2, wobei:
die Schutzvorrichtung (40) ein plattengeformtes Element ist, und
der Deformations-induzierende Teil (51-54, 61, 62) einen Stufenteil (51, 52) umfasst, welcher zwischen dem befestigenden Flächenteil (41, 42) und dem äußeren Flächenteil (45, 46) bereitgestellt ist.

6. Elektrische Verdichterstruktur nach Anspruch 5, wobei:
die Kopplungsteile (11-14) auf beiden Seiten des Gehäuses (10) in einer zweiten Richtung bereitgestellt sind, welche eine erste Richtung kreuzt, in welcher der Verdichtungsmechanismus (2) und die elektrisch betriebene Einheit (3, 4) nebeneinander angeordnet sind;
der befestigende Flächenteil (41, 42) und der äußere Flächenteil (45, 46) auf jeder der beiden Seiten der Schutzvorrichtung (40) in der zweiten Richtung angeordnet sind, und
ein Freiraum zwischen den befestigenden Flächenteilen (41, 42) an beiden Seiten in der zweiten Richtung oder zwischen den äußeren Flä-chenteilen (45, 46) an beiden Seiten in der zweiten Richtung gebildet ist.

7. Elektrische Verdichterstruktur nach Anspruch 6, wobei:
die Schutzvorrichtung (40) einen Verbindungsteil aufweist, welcher die äußeren Flächenteile (45, 46) an beiden Seiten in der zweiten Rich-tung miteinander verbindet,
der Freiraum derart gebildet ist, dass er sich über die äußeren Flächen-teile (45, 46) auf beiden Seiten, die befestigenden Flächenteile (41, 42) auf beiden Seiten sowie den Verbindungsteil (47) erstreckt; und
die Schutzvorrichtung (40) aufgrund des Freiraums eine zweizinkige Form hat.

8. Elektrische Verdichterstruktur nach Anspruch 1, wobei:
der Deformations-induzierende Teil (51-54, 61, 62) beabstandet von dem Gehäuse (10) angeordnet ist;
die Schutzvorrichtung (40) aufweist:
einen befestigenden Teil, welcher in einer Ebene des befestigenden Flächenteils (41, 42) bereitgestellt ist und an dem Gehäuse (10) befestigt ist; und
einen Kontaktteil (64), welcher an einer Endseite der elektrisch betrie-benen Einheit (3, 4) angeordnet ist, so dass er beabstandet von dem befes-tigenden Teil ist und mit dem Gehäuse (10) in Kontakt steht; und
der Deformations-induzierende Teil (51-54, 61, 62) auf einer virtuellen Linie (L1) angeordnet ist, welche den befestigenden Teil und den Kontakt-teil miteinander verbindet, oder welche von der virtuellen Linie (L1) nach außen angeordnet ist.

9. Elektrische Verdichterstruktur nach Anspruch 1, wobei:
das Gehäuse (10) einen Kopplungsteil (11-14) für ein Koppeln des Gehäuses (10) mit einem Element durch ein Kopplungselement (71), wel-ches einen Teil eines Fahrzeugs bildet, aufweist,
der Kopplungsteil (11-14) mit einer Lagerfläche (11b-14b), welcher der Schutzvorrichtung (40) zugewandt ist, bereitstellt,
die Schutzvorrichtung (40) an einer Außenseite eines Fahrzeugs rela-tiv zu dem Gehäuse (10) angeordnet ist;
ein Deformations-induzierender Teil (51-54, 61, 62), welcher eine De-formation induziert, wenn eine Last von der Außenseite des Fahrzeugs wirkt, in der Schutzvorrichtung (40) an einer Position bereitgestellt ist, wel-che der elektrisch betriebenen Einheit (3, 4) zugewandt ist,
der Deformations-induzierende Teil (51-54, 61, 62) einen Einfügeteil (61, 62) umfasst, welcher an einer Position bereitgestellt ist, welche der La-gerfläche (11b-14b) zugewandt ist, und in welchen das Kopplungselement (71) einfügbar ist; und
eine Richtung, in welcher das Kupplungselement (71) in das Element eingefügt ist, welches einen Teil eines Fahrzeugs bildet, relativ zu einer Fahrzeug-vorne-hinten-Richtung oder einer Fahrzeugbreitenrichtung ge-neigt ist.

10. Schutzvorrichtung (40) für einen elektrischen Verdichter, welche einen elektrischen Verdichter schützt, welcher einen Verdichtungsmechanismus (2), welcher ein Kältemittel verdichtet, eine elektrisch betriebene Einheit (3, 4), welche den Verdichtungsmechanismus (2) durch Elektrizität antreibt, und ein Gehäuse (10) aufweist, welches den Verdichtungsmechanismus (2) und die elektrisch betriebene Einheit (3, 4) aufnimmt,
wobei die Schutzvorrichtung (40) für einen elektrischen Verdichter **dadurch**
**gekennzeichnet ist, dass**:
die Schutzvorrichtung (40) an einer Außenseite des Gehäuses (10) an einer Position angeordnet ist, welche der elektrisch betriebenen Einheit (3, 4) zugewandt ist, und
dass die Schutzvorrichtung (40) aufweist:
einen befestigenden Flächenteil (41, 42), welcher an dem Gehäuse (10) befestigt ist, und
einen Deformations-induzierenden Teil (51-54, 61, 62), welcher dazu eingerichtet ist, zu deformieren, wenn eine Last auf die Schutzvorrichtung (40) von einer Außenseite wirkt, und welcher an einer Position bereitgestellt ist, welche der elektrisch betriebenen Einheit (3, 4) zugewandt ist.

## Revendications

1. Structure de compresseur électrique comportant :
un mécanisme de compression (2) qui comprime un réfrigérant ;
une unité à commande électrique (3, 4) qui entraîne le mécanisme de compression (2) par l'électricité ;
un boîtier (10) qui loge le mécanisme de compression (2) et l'unité à commande électrique (3, 4) ; et
un protecteur (40) qui présente une partie surface de fixation (41, 42) à fixer au boîtier (10) et est disposé sur un côté externe du boîtier (10), à une position faisant face à l'unité à commande électrique (3, 4),
la structure de compresseur électrique étant **caractérisée en ce qu'**une partie (51-54, 61, 62) induisant une déformation qui induit une déformation lorsqu'une charge agit sur le protecteur (40) depuis un extérieur, est disposée dans le protecteur (40), à une position faisant face à l'unité à commande électrique (3, 4).

2. Structure de compresseur électrique selon la revendication 1, dans laquelle :
le protecteur (40) présente une partie surface externe (45, 46) qui est située à l'extérieur de la partie surface de fixation (41, 42) dans une direction extérieure du boîtier (10) orientée depuis un intérieur vers un extérieur du boîtier (10) ; et
la partie (51-54, 61, 62) induisant une déformation est disposée dans la partie surface externe (45, 46).

3. Structure de compresseur électrique selon la revendication 1 ou la revendication 2, dans laquelle :
le boîtier (10) présente une partie d'accouplement (11-14) pour accoupler le boîtier (10) à un organe constituant une partie d'un véhicule par l'intermédiaire d'un organe d'accouplement (71) ;
la partie d'accouplement (11-14) est dotée d'une surface d'appui (11b-14b) qui fait face au protecteur (40) ; et
la partie (51-54, 61, 62) induisant une déformation comporte une partie d'insertion (61, 62) qui est disposée à une position faisant face à la surface d'appui (11b-14b) et dans laquelle l'organe d'accouplement (71) peut être inséré.

4. Structure de compresseur électrique selon la revendication 3, dans laquelle :
le boîtier (10) est doté d'une pluralité de parties d'accouplement (11-14) ;
la pluralité de parties d'accouplement (11-14) sont disposées espacées les unes des autres le long d'une première direction dans laquelle le mécanisme de compression (2) et l'unité à commande électrique (3, 4) sont situés l'un à côté de l'autre ; et
la partie surface de fixation (41, 42) est fixée à une position qui se trouve entre les parties d'accouplement (11-14) situées les unes à côté des autres dans la première direction et qui est décalée dans une direction croisant la première direction.

5. Structure de compresseur électrique selon la revendication 2, dans laquelle :
le protecteur (40) est un organe en forme de plaque ; et
la partie (51-54, 61, 62) induisant une déformation comporte une partie étagée (51, 52) qui est disposée entre la partie surface de fixation (41, 42) et la partie surface externe (45, 46).

6. Structure de compresseur électrique selon la revendication 5, dans laquelle :
les parties d'accouplement (11-14) sont disposées des deux côtés du boîtier (10) dans une deuxième direction qui croise une première direction dans laquelle le mécanisme de compression (2) et l'unité à commande électrique (3, 4) sont situés l'un à côté de l'autre ;
la partie surface de fixation (41, 42) et la partie surface externe (45, 46) sont disposées sur chacun des deux côtés du protecteur (40) dans la deuxième direction ; et
un jeu est formé entre les parties surfaces de fixation (41, 42) des deux côtés dans la deuxième direction ou entre les parties surfaces externes (45, 46) des deux côtés dans la deuxième direction.

7. Structure de compresseur électrique selon la revendication 6, dans laquelle :
le protecteur (40) présente une partie de liaison qui relie les parties surfaces externes (45, 46) l'une à l'autre des deux côtés dans la deuxième direction ;
le jeu est formé de façon à s'étendre sur les parties surfaces externes (45, 46) des deux côtés, les parties surfaces de fixation (41, 42) des deux côtés et la partie de liaison (47) ; et
le protecteur (40) présente une forme à deux dents en raison du jeu.

8. Structure de compresseur électrique selon la revendication 1, dans laquelle :
la partie (51-54, 61, 62) induisant une déformation est disposée espacée du boîtier (10) ;
le protecteur (40) présente :
une partie de fixation qui est disposée dans un plan de la partie surface de fixation (41, 42) et fixée au boîtier (10) ; et
une partie de contact (64) qui est disposée sur un côté d'extrémité de l'unité à commande électrique (3, 4) de façon à être espacée de la partie de fixation et entre en contact avec le boîtier (10) ; et
la partie (51-54, 61, 62) induisant une déformation est disposée sur une ligne virtuelle (L1) reliant la partie de fixation et la partie de contact l'une à l'autre, ou est disposée à l'extérieur de la ligne virtuelle (L1).

9. Structure de compresseur électrique selon la revendication 1, dans laquelle :
le boîtier (10) présente une partie d'accouplement (11-14) pour accoupler le boîtier (10) à un organe constituant une partie d'un véhicule par l'intermédiaire d'un organe d'accouplement (71) ;
la partie d'accouplement (11-14) est dotée d'une surface d'appui (11b-14b) qui fait face au protecteur (40) ;
le protecteur (40) est disposé sur un côté externe de véhicule par rapport au boîtier (10) ;
une partie (51-54, 61, 62) induisant une déformation qui induit une déformation lorsqu'une charge agit depuis le côté externe de véhicule est disposée dans le protecteur (40), à une position faisant face à l'unité à commande électrique (3, 4) ;
la partie (51-54, 61, 62) induisant une déformation comporte une partie d'insertion (61, 62) qui est disposée à une position faisant face à la surface d'appui (11b-14b) et dans laquelle l'organe d'accouplement (71) peut être inséré ; et
une direction dans laquelle l'organe d'accouplement (71) est inséré dans l'organe constituant une partie du véhicule est inclinée par rapport à une direction avant-arrière de véhicule ou une direction de largeur de véhicule.

10. Protecteur (40) pour un compresseur électrique qui protège un compresseur électrique présentant un mécanisme de compression (2) qui comprime un réfrigérant, une unité à commande électrique (3, 4) qui entraîne le mécanisme de compression (2) par l'électricité, et un boîtier (10) qui loge le mécanisme de compression (2) et l'unité à commande électrique (3, 4),
le protecteur (40) pour un compresseur électrique étant **caractérisé en ce que** :
le protecteur (40) est disposé sur un côté externe du boîtier (10), à une position faisant face à l'unité à commande électrique (3, 4) ; et
le protecteur (40) présente :
une partie surface de fixation (41, 42) fixée au boîtier (10) ; et
une partie (51-54, 61, 62) induisant une déformation, qui est configurée pour se déformer lorsqu'une charge agit sur le protecteur (40) depuis un extérieur, et est disposée à une position faisant face à l'unité à commande électrique (3, 4).
